# EUROPÄISCHE PATENTANMELDUNG

(11) **EP 0 600 112 A1**
(43) Veröffentlichungstag der Anmeldung: **08.06.1994**
(21) Anmeldenummer: 92120421.0
(22) Anmeldetag: 30.11.1992
(51) Int. Cl.: G06F 12/14, G06F 12/10

(54) **Datenverarbeitungsanlage mit virtueller Speicheradressierung und schlüsselgesteuertem Speicherzugriff**

(71) Anmelder: Siemens Nixdorf Informationssysteme Aktiengesellschaft, D-33102 Paderborn (DE)
(72) Erfinder: Eckenberger, Eberhard, Dipl.-Ing., W-8000 München 83 (FR); Wimmer, Manfred, Dipl.-Ing., W-8225 Traunreut (DE)
(74) Vertreter: Fuchs, Franz-Josef, Dr.-Ing.

(57) **Zusammenfassung**

Mit der Adreßumsetzungseinheit (ACU) des Prozessors (PIU) gekoppelte eigenständige Schlüsselspeichersteuereinheit (KMU) mit einem durch reale Speicheradressen ansteuerbaren Schlüsselspeicher (KM), der Einträge (KEY) für jeden im Arbeitsspeicher gesondert geschützten Datenabschnitt, z.B. Seite, enthält. Jeder Eintrag besteht aus dem Speicherschlüssel (ACC) und drei weiteren Steuerbits (F, R und C,) von denen die letzteren auch der Verwaltung dienen. Ansteuerung von Adreßumsetzungseinheit (ACU) und Prozessor (PIU) über gemeinsame umschaltbare Eingabeschnittstelle (KMIA), während die Ein-/Ausgabeprozessoren (IOP) über eine gesonderte Schnittstelle angekoppelt sind. Die Schlüsselspeichersteuereinheit (KMU) arbeitet befehlsgesteuert. Sie wird bei jeder Speicheranforderung des Prozessors (PIU) im Rahmen der Adreßumsetzung von der Adreßumsetzungseinheit (ACU) angesteuert, wenn die Verwaltungsbits zu ändern sind oder noch kein Eintrag im Adreßumsetzungspuffer (TLB) vorliegt. Kennzeichnung von Einträgen im Adreßumsetzungspuffer (TLB) in einem zum Schlüssselspeicher parallel adressierbaren Speicher (KIAT) gleicher Tiefe verhindert unnötige Überprüfungen des Adreßumsetzungspuffers (TLB), wenn Einträge zu löschen sind.

## Beschreibung

Die Erfindung betrifft eine Datenverarbeitungsanlage entsprechend dem Oberbegriff des Patentanspruches 1.

Die Verknüpfung der Adreßumsetzung mit der Schlüsselverwaltung für den Speicherschutz ist allgemein bekannt -man siehe z.B. "Computer Architecture And Parallel Processing" von Kai Hwank und Faye A. Briggs, McGraw-Hill Book Company, New York, 1984, S. 65 bis 79, oder Siemens Druckschrift D15/5104 -04, S. 6-1 bis 6-7.

Auch ist es bekannt, die Speicherschlüssel nicht in die einzelnen Übersetzungstabellen aufzunehmen, sondern in einem gesonderten Speicherteil des Arbeitsspeichers als Schlüsselspeicher mit der reallen Seitenadresse ansteuerbar zusammengefaßt zu speichern -man siehe z.B. EP-0 106 600-B1. Die Überprüfung der Zugriffsberechtigung erfolgt dabei im Rahmen der Speicheransteuerung vor dem freizugebenden, eigentlichen Speicherzugriff auf die Daten im Arbeitsspeicher. Auch diese Lösung läßt sich mit einem Adreßumsetzungspuffer, dessen Einträge zusätzlich den Speicherschlüssel enthalten, koppeln mit dem Vorteil, daß Arbeitsspeicherzugriffe unmittelbar ohne vorherige Prüfung anhand des Eintrags im Schlüsselspeicher freigegeben werden können.

Den eigentlichen Schlüsselwerten sind im allgemeinen gesonderte, der Verwaltung dienende Steuerbits zugeordnet, die darüber Auskunft geben, ob auf eine zugehörige Datenseite im Arbeitsspeicher zugegriffen worden ist und ob der Zugriff schreibend und damit datenverändernd war. Diese Steuerbits müssen daher bei jedem Speicherzugriff angesteuert und gegebenenfalls geändert werden, so daß es zweckmäßig ist, bei Verwendung eines Adreßumsetzungspuffers auch diese Steuerbits dort zu führen.

Dabei ist jedoch sicherzustellen, daß bei der Löschung eines Eintrags im Adreßumsetzungspuffer die zugehörigen Steuerbits in den Schlüsselspeicher übertragen werden. Bei im Adreßumsetzungspuffer vorliegenden Einträgen können daher Zugriffe zum Schlüsselspeicher ebenfalls entfallen. Sie sind weiterhin nur erforderlich, wenn infolge Fehlens eines Eintrags im Adreßumsetzungspuffer eine Adreßübersetzung erforderlich wird. Von Nachteil dabei ist jedoch, daß die Einträge für die Verwaltungsbits im Schlüsselspeicher und im Adreßumsetzungspuffer nicht mehr konsistent sind, so daß Direktzugriffe eines Ein-/Ausgabeprozessors zum Arbeitspeicher und Änderungen der Schlüsseleinträge im Schlüsselspeicher bei notwendig werdendem Seitenwechsel besondere Steuerungsmaßnahmen erfordern.

Aufgabe der Erfindung ist es daher, eine Datenverarbeitungsanlage entsprechend dem Oberbegriff des Patentanspruches 1 so zu gestalten, daß die mit der Verwaltung der Speicherschlüssel verbundenen Probleme in einfacher und die Datenverarbeitungsanlage weniger belastender Weise sowie mit verhältnismäßig geringem Aufwand gelöst werden.

Diese Aufgabe wird durch die kennzeichnenden Merkmale des Patentanspruches 1 gelöst. Danach sind alle Schlüssel zu den im Arbeitsspeicher jeweils befindlichen Speicherabschnitten oder -seiten ebenfalls in einem Speicher als Schlüsselspeicher zusammengefaßt. Dieser Schlüsselspeicher ist aber nicht mehr Bestandteil des Arbeitsspeichers, sondern einer eigenständigen Schlüsselspeichersteuereinheit zugeordnet, die unabhängig vom Arbeitsspeicher über jeweils gemeinsame Schnittstellen wahlweise sowohl mit dem steuernden Prozessor als auch mit der Adreßumsetzungseinheit koppelbar ist. Alle vom Betriebssystem über den steuernden Prozessor veranlaßten Änderungen im Schlüsselspeicher und alle im Rahmen der über die Adreßumsetzungseinheit geleiteten normalen Speicherzugriffe notwendig werdenden Änderungen können daher in einheitlicher Weise befehlsgesteuert ohne zusätzliche Belastung des Arbeitsspeichersystems ausgeführt werden.

In analoger Weise zur Ansteuerung über die Eingabeschnittstelle können gemäß Patentanspruch 3 auch Ein-/Ausgabeprozessoren über individuelle Schnittstellen an die Schlüsselspeichersteuereinheit angeschlossen sein, wobei eine Vorrangschaltung für alle Ansteuerschnittstellen den Zugriff zum Schlüsselspeicher regelt. Die für Rücksignale notwendige zweite Schnittstelle braucht in diesem Falle nur ein Prüfsignal "Zugriff erlaubt" bzw. "Zugriff nicht erlaubt" zurückzuleiten und kann entsprechend schmal gestaltet werden.

Gemäß Anspruch 4 ist dem Schlüsselspeicher ein weiterer Speicher parallel geschaltet, wobei beide Speicher parallel ansteuerbar sind. In diesem weiteren Speicher wird jeder im Adreßumsetzungspuffer enthaltene Eintrag durch ein Steuerbit gekennzeichnet, so daß bei jeder Änderung eines Schlüssels im Schlüsselspeicher parallel geprüft werden kann, ob ein zwangsläufig zu löschender Eintrag im Adreßumsetzungspuffer vorliegt. Dieser als Filter wirkende weitere Speicher verhindert damit, daß bei jeder Schlüsseländerung der gesamte Adreßumsetzungspuffer auf entsprechende Einträge überprüft werden muß.

Einzelheiten der Erfindung seien nachfolgend anhand eines in der Zeichnung dargestellten Ausführungsbeispieles näher erläutert. Im einzelnen zeigen
Figur 1 ein Blockschaltbild der Schlüsselspeichersteuereinheit gemäß der Erfindung mit den zugehörigen Schnittstellen,
Figur 2 ein Flußdiagramm zur Erläuterung des Steuerungsablaufs bei einem an die Adreßumsetzungseinheit gerichteten Speicherzugriff,
Figur 3 ein Flußdiagramm zu Erläuterung des Steuerungsablaufs in der Schlüsselspeichersteuereinheit, abhängig vom jeweils auszuführenden Befehl und
Figur 4A und 4B Flußdiagramme für die Ausführung einzelner Befehle in Ergänzung des Flußdiagramms von Figur 3.

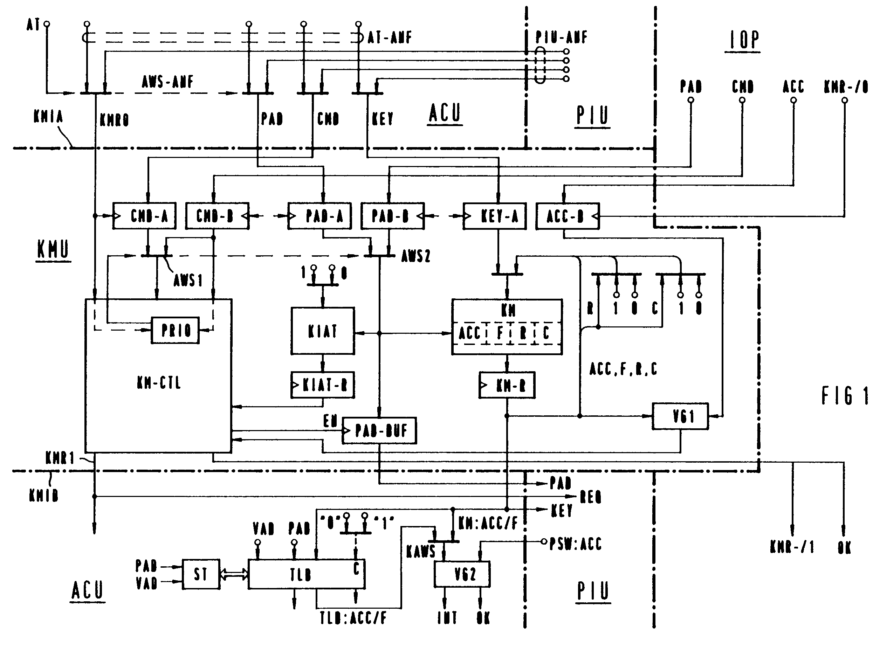

Beim Blockschaltbild von Figur 1 bildet der mittlere Teil die Schlüsselspeichersteuereinheit KMU, die im oberen Teil über die Eingabeschnittstelle KMIA und im unteren Teil über die Ausgabeschnittstelle KMIB mit der Adreßumsetzungseinheit ACU und über diese auch mit dem steuernden Prozessor PIU verbunden ist, während der rechte Teil den Anschluß von und zum Ein-/Ausgabeprozessor IOP wiedergibt. Bei mehreren Ein-/Ausgabeprozessoren könnten diese einzeln nacheinander über eine gesonderte Auswahlsteuerschaltung mit dem gemeinsamen Anschluß zur Schlüsselspeichersteuereinheit KMU verbunden werden.

Die Ansteuerung sowohl seitens der Adreßumsetzungseinheit ACU und des steuernden Prozessors PIU als auch des Ein-/Ausgabeprozessors IOP erfolgt in einheitlicher Weise durch Bereitstellung der realen Speicherseitenadresse PAD und des auszuführenden Befehls CMD sowie des zugehörigen Schlüsselspeichereintrags KEY bei Anforderungen vom steuernden Prozessor PIU bzw. des Zugriffsschlüssels ACC bei Anforderungen vom Ein-/Ausgabeprozessor IOP. Der Eingabeschnittstelle KMIA sind Auswahlschalter AWS-ANF zur Durchschaltung entweder der Anforderung PIU-ANF des steuernden Prozessors PIU oder der Anforderungen AT-ANF der Adreßumsetzungseinheit ACU vorgeschaltet. Eingestellt werden diese Auswahlschalter AWS-ANF durch das Steuersignal AT der Adreßumsetzungseinheit ACU in der Weise, daß im Ruhezustand die Anforderungen des steuernden Prozessors PIU durchgeschaltet werden, während bei an die Adreßumsetzungseinheit ACU gerichteten Speicheranforderungen des steuernden Prozessors die Adreßumsetzungseinheit auf die Durchschaltung eigener Anforderungen umsteuert.

Die Schnittstellenleitungen sind jeweils mit entsprechenden Übernahmeregistern CMD-A, PAD-A, KEY-A bzw. CMD-B, PAD-B, ACC-B, der Schlüsselspeichersteuereinheit KMU verbunden, wobei die Übernahme beispielsweise durch die Anforderungen begleitende Anforderungssignale KMR0 bzw. KMR-IO gesteuert wird. Eine Vorrangsschaltung PRIO in der Steuerung KM-CTL überwacht das Vorliegen von Anforderungen und wählt die jeweils vorrangige Anforderung aus, indem die den Übernahmeregistern nachgeschalteten Auswahlschalter AWS1 und AWS2 entsprechend eingestellt werden. Damit steht der jeweilige Befehl CMD einer Anforderung für die Auswertung durch die Steuereinrichtung KM-CTL zur Verfügung und ebenso die jeweils zugehörige reale Seitenadresse PAD für die Ansteuerung des Schlüsselspeichers KM.

Dieser Schlüsselspeicher KM enthält für jeden im Arbeitsspeicher der Datenverarbeitungsanlage geschützten Speicherabschnitt, z.B. in Form einer Speicherseite von jeweils 4 KByte, einen Eintrag, der aus dem eigentlichen Speicherschlüssel ACC, einem Steuerbit F als mögliche Holsperre und zwei Verwaltungsbits R und C besteht, wobei das Bit R bei jedem Speicherzugriff gesetzt wird und das gesetzte Bit C einen schreibenden Speicherzugriff kennzeichnet. Mit einem 256 KByte tiefen Schlüsselspeicher kann also z.B. ein Arbeitsspeicher mit 1 GByte Speicherkapazität abgedeckt werden.

Der Schlüsselspeicher KM ist mit einem Leseregister KM-R gekoppelt, dessen Ausgang einerseits mit der Ausgabeschnittstelle KMIB und andererseits mit einem Rückkopplungszweig zum Auswahlschalter AWS3 zur Änderung der Steuerbits R und C für einen eingetragenen Schlüssel ACC/F im Schlüsselspeicher KM verbunden ist. Außerdem kann der ins Leseregister KM-R übernommene Speicherschlüssel bei Anforderung durch den Ein-/Ausgabeprozessor IOP einem Vergleicher VG1 zugeführt werden, der den im Übernahmeregister ACC-B verfügbaren Zugriffsschlüssel mit dem gelesenen Speicherschlüssel vergleicht und abhängig vom Prüfergebnis die Steuerung KM-CTL veranlaßt ein entsprechendes Signal OK an den Ein-/Ausgabeprozessor IOP zu liefern, das durch ein Begleitsignal KMR-I1 zur Auswertung freigegeben wird.

Über die Ausgabeschnittstelle KMIB kann ein aus dem Schlüsselspeicher KM gelesener Schlüsseleintrag KEY oder Teile desselben in Verbindung mit einem Rückmeldesignal KMR1 der Steuereinrichtung KM-CTL einerseits dem steuernden Prozessor PIU und andererseits der Adreßumsetzungseinheit ACU übergeben werden. Zuständiger Empfänger ist dabei immer die Einheit, die die zugehörige Anforderung ausgelöst hat. War die anfordernde Einheit die Adreßumsetzungseinheit ACU, dann wird der gelesene Speicherschlüssel KM:ACC/F gegebenenfalls für den Eintrag in den Adreßumsetzungspuffer TLB und für den Vergleich mit dem vom steuernden Prozessor PIU zur Verfügung gestellten Zugriffsschlüssel PSW:ACC benötigt. Dies ist im unteren Teil der Figur angedeutet, der in schematischer Darstellung den Adreßumsetzungspuffer TLB der Adreßumsetzungseinheit ACU mit zugehöriger Steuerung ST zeigt. Die Einträge im Adreßumsetzungspuffer TLB bestehen in bekannter Weise aus von der übrigen Adreßumsetzungssteuerung gelieferten Paaren von virtueller Adresse VAD und zugehöriger realer Adresse PAD, die durch die zugehörigen Speicherschlüssel ACC/F und das Steuerbit C ergänzt sind, während die Funktion des Steuerbits R vom jeweiligen Gültigkeitsbit übernommen wird.

Bei einem bereits im Adreßumsetzungspuffer TLB vorhandenen Eintrag kann abhängig von der virtuellen Adresse VAD neben der zugehörigen realen Adresse PAD unmittelbar auch der zugehörige Speicherschlüssel TLB:ACC ermittelt und für einen Vergleich mit dem vom steuernden Prozessor PIU gelieferten Zugriffsschlüssel PSW:ACC/F durch den Vergleicher VG2 herangezogen werden, so daß ein Speicherzugriff mit der ermittelten realen Adresse PAD unmittelbar freigegeben oder verhindert werden kann. Ergibt dagegen die Überprüfung des Adreßumsetzungspuffers TLB, daß noch kein Eintrag vorliegt, dann kann die Überprüfung der Zugriffsberechtigung unmittelbar nach der dann notwendigen Adreßübersetzung anhand des aus dem Schlüsselspeicher KM gelesenen Speicherschlüssels KM:ACC/F vorgenommen werden.

Parallel zum Schlüsselspeicher KM ist ein weiterer Speicher KIAT gleicher Tiefe vorgesehen, der mit der jeweils freigegebenen realen Adresse PAD parallel zum Schlüsselspeicher angesteuert wird. Die Einträge in diesem Speicher KIAT bestehen jeweils aus einem Bit, das im gesetzten Zustand einen zugehörigen Eintrag im Adreßumsetzungspuffer TLB anzeigt. Bei einer Änderung des Schlüssel im Schlüsselspeicher KM infolge des Austausches einer Speicherseite im Arbeitsspeicher kann auf diese Weise unmittelbar erkannt werden, ob durch die Schlüsseländerung ungültig gewordene Einträge im Adreßumsetzungspuffer TLB zu löschen sind oder nicht. Dadurch entfallen in einfacher Weise unnötige, das System belastende Überprüfungen des Adreßumsetzungspuffers auf zu löschende Einträge.

Die Schlüsselspeichersteuereinheit KMU arbeitet befehlsgesteuert durch die mit der jeweiligen Anforderung angelieferten Befehle CMD. Dabei kann abhängig von der anfordernden Quelle zwischen drei Gruppen von Befehlen unterschieden werden, nämlich
a) Befehle der Adreßumsetzungseinheit ACU zur Änderung der Steuerbits im Schlüsselspeicher KM und im Speicher KIAT im Rahmen von Speicherzugriffsanforderungen durch den steuerdnen Prozessor PIU und gegebenenfalls zum Auswerten des Speicherschlüssels bei fehlenden Einträgen im Adreßumsetzungspuffer TLB,
b) Befehle des Ein-/Ausgabeprozessors IOP zur Prüfung der Speicherzugriffsberechtigung anhand des im Schlüsselspeicher KM eingetragenen Speicherschlüssels mit entsprechender Änderung der der Verwaltung dienenden Steuerbits R und C und
c) vom Betriebssystem veranlaßte Befehle des steuernden Prozessors PIU in Verbindung mit der Bereitstellung und der Auslagerung von Speicherseiten im Arbeitsspeicher.

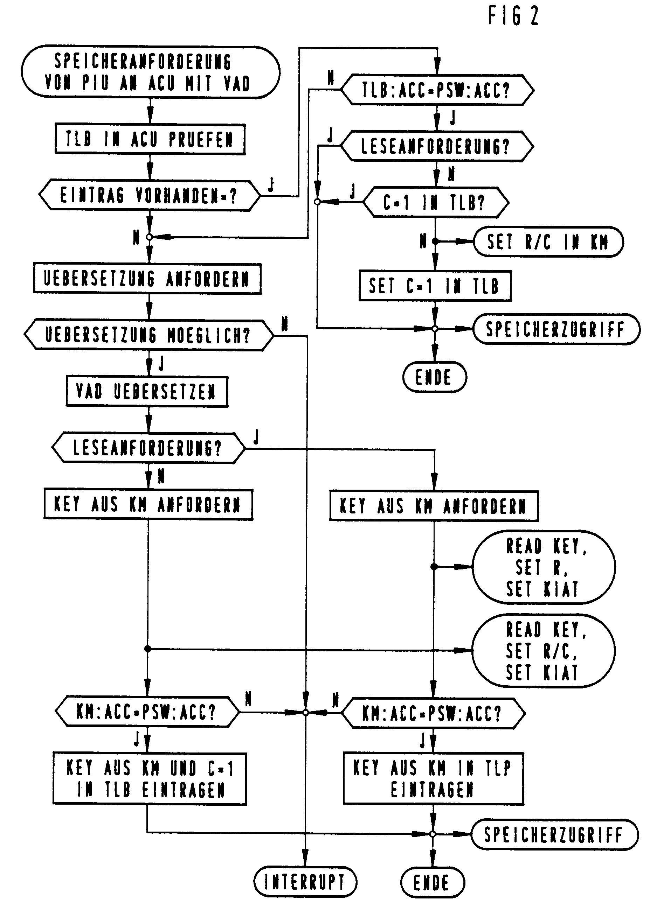

Die Einbettung der Befehle der Adreßumsetzungseinheit ACU in den üblichen Adreßübersetzungsvorgang im Rahmen einer Speicheranforderung ist aus dem Flußdiagramm von Figur 2 ersichtlich. Anhand der mit der Speicheranforderung verbundenen virtuellen Speicheradresse VAD wird zunächst der Adreßumsetzungspuffer TLB auf Vorliegen einer übersetzten realen Adresse PAD zu der virtuellen Adresse überprüft. Liegt noch kein Eintrag vor, wird die Adreßübersetzung angefordert und in bekannter Weise durchgeführt. Unabhängig davon, ob es sich beim gewünschten Speicherzugriff um einen Lese- oder Schreibzugriff handelt, wird anhand der übersetzten Adresse PAD der zugehörige Speicherschlüssel aus dem Schlüsselspeicher KM angefordert, was zu den entsprechenden Befehlen READ KEY... zum Lesen des Speicherschlüssels führt, wobei im Vorgriff bei einer Leseanforderung das Steuerbit R gesetzt wird und bei einer Schreibanforderung beide Steuerbits R und C im Schlüsselspeicher KM gesetzt werden. Außerdem wird im selben Steuervorgang das Steuerbit im Speicher KIAT bereits gesetzt, da bei einem zulässigen Speicherzugriff auch ein Eintrag im Adreßumsetzungspuffer TLB anzulegen ist. Anhand des aus dem Schlüsselspeicher KM gelesenen Speicherschlüssels KM:ACC/F wird dann durch den Vergleicher VG2 anhand des vom steuernden Prozessor PIU gelieferten Zugriffssschlüssels PSW:ACC die Zulässigkeit des Speicherzugriffs überprüft. Ist der Zugriff zulässig, wird ein entsprechender Eintrag im Adreßumsetzungspuffer TLB mit dem gelesenen Speicherschlüssel ACC/F angelegt, wobei im Falle von Schreibzugriffen auch das Steuerbit C gesetzt wird. Außerdem wird der eigentliche Speicherzugriff veranlaßt.

Ist dagegen keine Adreßübersetzung möglich oder die Zugriffsberechtigung nicht gegeben, wird mit INTERRUPT in bekannter Weise in eine Unterbrechungsroutine übergeleitet.

Ist im Adreßumsetzungspuffer TLB bereits ein gültiger Eintrag zu der die Speicheranforderung begleitenden virtuellen Adresse VAD vorhanden, wird die Zugriffsberechtigung unmittelbar anhand des im Adreßumsetzungspuffer TLB eingetragenen Speicherschlüssels TLB:ACC/F überprüft. Liegt eine Schreibanforderung vor, wird außerdem geprüft, ob das Steuerbit C im Adreßumsetzungspuffer bereits gesetzt ist. Ist dies der Fall oder liegt eine Leseanforderung vor, kann bei gegebener Zugriffsberechtigung unmmittelbar der gewünschte Speicherzugriff veranlaßt werden. Im anderen Falle ist die Schlüsselspeichersteuereinheit KMU mit dem Befehl SET R/C anzusteuern und im Adreßumsetzungspuffer TLB das Steuerbit C zu setzen. Das Mitführen des Steuerbits C im Adreßumsetzungspuffer erspart somit ein zusätzliches Ansteuern der Schlüsselspeichersteuereinheit KMU.

Fällt dagegen die Schlüsselüberprüfung anhand des Eintrags im Adreßumsetzungsspeicher TLB negativ aus, dann muß in die übliche Adreßübersetzung entsprechend dem bereits erläuterten linken Ablaufzweig des Flußdiagrammes übergeleitet werden.

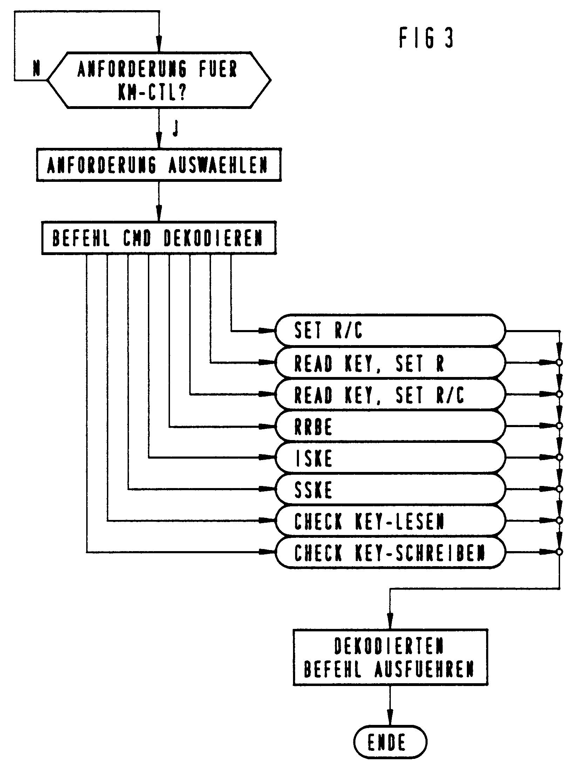

Das Flußdiagramm von Figur 3 zeigt den durch Anforderungen an die Schlüsselspeichersteuereinheit KMU ausgelösten und von der Steuerung KM-CTL durchgeführten allgemeinen Steuerungsablauf ohne Differenzierung entsprechend den verschiedenen Befehlen CMD. Danach werden die verschiedenen Schnittstellen auf das Vorliegen von Anforderungen fortlaufend überwacht. Ist eine Anforderung erkannt, wird bei mehreren gleichzeitigen Anforderungen die jeweils bevorrechtigte ausgewählt und der zugehörige Befehl CMD decodiert und ausgeführt.

Beim gewählten Beispiel sind insgesamt acht verschiedene Befehle vorgesehen, nämlich die bei der Beschreibung des Flußlaufdiagramms von Figur 2 bereits angesprochenen Befehle SET R/C, READ KEY-SET R und READ KEY-SET R/C von der Adreßumsetzungseinheit ACU, die vom Betriebssystem ausgehenden Befehle RRBE, ISKE und SSKE sowie die beiden Befehle CHECK KEY... vom Ein-/Ausgabeprozessor IOP.

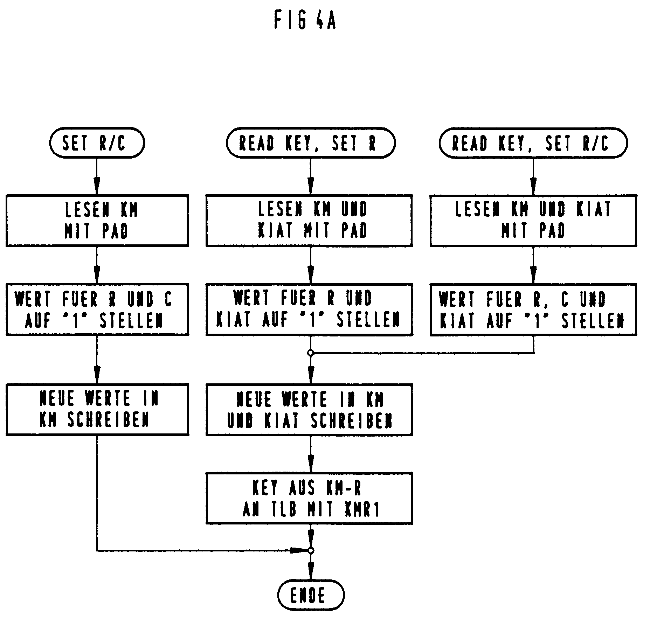

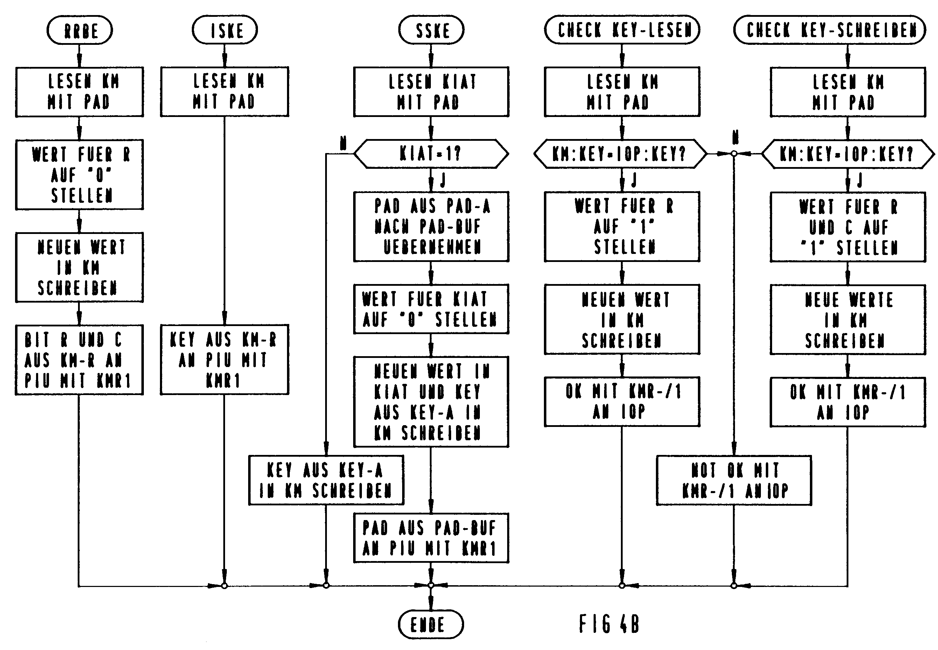

Die von diesen Befehlen durch die Steuerung KM-CTL veranlaßten Steuerungsabläufe sind in Figur 4 im einzelnen dargestellt.

Figur 4A zeigt die Steuerungsabläufe für die drei Befehle der Adreßumsetzungseinheit ACU. In allen Fällen wird mit der realen Adresse PAD der Schlüsselspeicher KM und bei den Befehlen READ KEY... auch der Speicher KIAT gelesen. Danach werden die Werte für die zu ändernden Speicherstellen eingestellt und als neue Werte zurückgeschrieben. Bei den Befehlen READ KEY.... wird außerdem der gelesene Speicherschlüssel an den Adreßumsetzungspuffer TLB mit dem Übergabesignal KMR1 weitergeleitet.

In ähnlicher Weise sind die Steuerungsabläufe für die Befehle CHECK KEY vom Ein-/Ausgabeprozessor IOP gemäß dem rechten Teil von Figur 4B gestaltet, wobei nach dem Lesen des Schlüsselspeichers KM zunächst der Schlüsselvergleich durchgeführt wird und Änderungen der Steuerbits im Schlüsselspeicher KM nur bei Schlüsselübereinstimmung ausgeführt werden. Beide Befehlsausführungen enden mit einer Rückmeldung an den anfordernden Ein-/Ausgabeprozessor IOP, wobei bei Schlüsselungleichheit die Rückmeldung unmittelbar erfolgt.

Gegenüber den bereits beschriebenen Befehlsabläufen haben die zu den Befehlen RRBE, ISKE und SSKE des Betriebssystems im linken Teil von Figur 4B nicht unmittelbar mit einer Speicherzugriffsanforderung zu tun. Mit dem Befehl RRBE fragt das Betriebssystem die Einträge des Schlüsselspeichers KM periodisch der Reihe nach ab, um zu ermitteln, zu welcher Speicherseite längere Zeit nicht zugegriffen worden ist. Mit jeder Überprüfung werden daher die gelesenen Steuerbits R und C an den steuernden Prozessor PIU übertragen und ein gesetztes Steuerbit R wird jeweils zurückgesetzt. Das Betriebssystem ermittelt auf diese Weise eine Entscheidungsbasis für den Ersetzungsalgorithmus, wenn im Arbeitsspeicher Speicherplatz für eine neue Speicherseite benötigt wird.

Bevor aber eine neue Seite im Arbeitsspeicher ausgetauscht werden kann, muß jedoch geprüft werden, ob die Daten der alten Seite entsprechend der Kennezeichnung C = 1 verändert worden sind. Bei unveränderter Seite kann diese unmittelbar überschrieben werden, während eine im Arbeitsspeicher geänderte Seite erst ausgelagert werden muß. Das Betriebssystem prüft dies mit dem Befehl ISKE, indem der gesamte Eintrag im Schlüsselspeicher KM gelesen und an den steuernden Prozessor PIU übertragen wird.

Schließlich wird beim Austausch einer Seite im Arbeitsspeicher der zugehörige Schlüsseleintrag im Schlüsselspeicher KM ungültig und ist daher durch den für die neue Seite zu ersetzen. Hierzu dient der Befehl SSKE, bei dem zunächst anhand der Einstellung durch die reale Seitenadresse PAD der Speicher KIAT gelesen wird. Ist das gelesene Steuerbit nicht gesetzt, wird der vom steuernden Prozessor PIU mitgeteilte Schlüsselspeichereintrag einschließlich der auf Null gesetzten Steuerbits R und C unmittelbar in den Schlüsselspeicher KM eingetragen. Liegt dagegen im Speicher KIAT eine Kennzeichnung vor, wird zunächst die im Übernahmeregister PAD-A stehende reale Seitenadresse PAD in das Register PAD-BUF übertragen. Anschließend wird die Kennzeichnung für den Speicher KIAT auf "0" gestellt, bevor die Einträge in beiden Speichern erneuert werden und die zwischengespeicherte reale Seitenadresse PAD an den steuernden Prozessor PIU übergeben wird. Das Betriebssystem kann dann anhand der so ermittelten realen Seitenadresse die Überprüfung des Adreßumsetzungspuffers TLB veranlassen und durch Löschen der betroffenen Einträge die Übereinstimmung mit dem im Eintrag im Schlüsselspeicher KM sichern.

Beim gezeigten Ausführungsbeispiel gemäß Figur 1 werden die Einträge KEY aus dem Schlüsselspeicher KM und die Adresse PAD aus dem Pufferregister PAD-BUF über getrennte Schnittstellenleitungen an den Prozessor PIU übergeben, wobei die Anzahl der Schnittstellenleitungen für die Adresse PAD wesentlich größer ist als die für den Eintrag KEY. Man könnte daher die Anzahl der Schnittstellenleitungen auf die für den Eintrag KEY reduzieren, wenn man die Adresse PAD jeweils in Portionen von der Länge des Eintrags KEY aufteilen und diese Portionen nacheinander über dieselben Schnittstellenleitungen übertragen würde.

## Patentansprüche

1. Datenverarbeitungsanlage, die mit virtueller Speicheradressierung und Adreßumsetzung der virtuellen Adressen (VAD) eines Hintergrundspeichers in reale Adressen (PAD) für einen Arbeitsspeicher (ASP) arbeitet und bei der Zugriffe zum Arbeitsspeicher (ASP) über eine Adreßumsetzungseinheit (ACU) mit Adreßumsetzungspuffer (TLB) an Hand virtueller Adressen (VAD) erfolgen, wobei im Arbeitsspeicher (ASP) nicht vorhandene Daten aus dem Hintergrundspeicher nachgeladen werden und dem zugehörigen Datenabschnitt, z.B. Speicherseite, jeweils eine reale Adresse (PAD) des im Arbeitsspeicher zur Verfügung gestellten Datenabschnittes zugeordnet wird, und bei der die Datenabschnitte durch zugeordnete Speicherschlüssel (ACC) gegen unberechtigte Zugriffe geschützt sind, indem die den einzelnen zu verarbeitenden Programmen oder Programmabschnitten zugeordneten Zugriffsschlüssel (PSW:ACC) jeweils mit dem entsprechenden Speicherschlüssel (ACC) verglichen werden und indem nur bei Übereinstimmmung beider der Zugriff erlaubt wird, wobei die Einträge im Adreßumsetzungspuffer (TLB) jeweils mit dem zugehörigen Speicherschlüssel (ACC) versehen sind und für den Vergleich verwendet werden,
**dadurch gekennzeichnet,**
- daß die Speicherschlüssel (ACC) aller im Arbeitsspeicher (ASP) vorhandenen Datenabschnitte in einem real adressierten Schlüsselspeicher (KM) zusammengefaßt sind, der Bestandteil einer eigenständigen Schlüsselspeichersteuereinheit (KMU) ist, die einerseits über eine gemeinsame, von der Adreßumsetzungseinheit (ACU) gesteuerte Eingabeschnittstelle (KMIA) und andererseits über eine gemeinsame Ausgabeschnittstelle (KMIB) jeweils sowohl mit der Adreßumsetzungseinheit (ACU) als auch mit dem steuernden Prozessor (PIU) verbunden ist,
- daß bei Speicherzugriffen, gesteuert durch entsprechende Befehle der Adreßumsetzungseinheit (ACU), Einträge des Schlüsselspeichers (KM) für die Einträge im Adreßumsetzungspuffer (TLB) zur Verfügung gestellt und dem Speicherschlüssel (ACC) im Schlüsselspeicher (KM) zugeordnete Steuerbits (R, C) abhängig von der jeweiligen Speicherzugriffsart verändert werden und
- daß zum Austausch von Datenabschnitten zwischen dem Hintergrundspeicher und dem Arbeitsspeicher (ASP), gesteuert durch entsprechende Befehle des steuernden Prozessors (PIU), die entsprechenden Schlüsseleinträge im Schlüsselspeicher (KM) überprüft und/oder geändert werden.

2. Datenverarbeitungsanlage nach Anspruch 1,
**dadurch gekennzeichnet,**
daß die Eingabeschnittstelle (KMIA) durch vorgeschaltete Umschalter (AWS-ANF) normalerweise mit dem steuernden Prozessor (PIU) verbunden ist, daß eine Umschaltung der Eingabeschnittstelle (KMIA) auf die Adreßumsetzungseinheit (ACU) durch diese nur nach einer Speicheranforderung durch den steuernden Prozessor im Rahmen der durchzuführenden Adreßumsetzung erfolgt und daß eine neue Anforderung von der Schlüsselspeicher-Steuereinheit (KMU) jeweils nur entgegengenommen wird, wenn eine zuvor angenommene Anforderung erledigt ist, so daß der steuernde Prozessor (PIU) anhand des von ihm ausgelösten Steuervorganges (Speicherzugriff oder Schlüsselspeicheransteuerung) erkennen kann, ob an der gemeinsamen Ausgabeschnittstelle (KMIB) anliegende Daten für ihn bestimmt sind oder nicht.

3. Datenverarbeitungsanlage nach Anspruch 1 oder 2,
**dadurch gekennzeichnet,**
daß Ein-/Ausgabeprozessoren (IOP) über eine gemeinsame Ansteuerschnittstelle parallel zur gemeinsamen Eingabeschnittstelle (KMIA) für den steuernden Prozessor (PIU) und die Adreßumsetzungseinheit (ACU) mit der Schlüsselspeichersteuereinheit (KMU) verbunden sind, daß eine Vorrangschaltung über die Annahme gleichzeitig vorliegender Anforderungen entscheidet und daß Anforderungen von einem Ein-/Ausgabeprozessor (IOP) lediglich mit einem Signal (OK) "Zugriff erlaubt" bzw. "Zugriff nicht erlaubt" beantwortet werden.

4. Datenverarbeitungsanlage nach einem der Ansprüche 1 bis 3,
**dadurch gekennzeichnet,** daß dem Schlüsselspeicher (KM) ein weiterer, real adressierter Speicher (KIAT) parallel geschaltet ist, in dem die im Adreßumsetzungspuffer (TLB) enthaltenen Einträge über Datenabschnitte des Arbeitsspeichers (ASP) durch ein gesondertes Steuerbit gekennzeichnet sind, daß bei Eintrag eines neuen Schlüssels (ACC) in dem Schlüsselspeicher (KM) der zweite Speicher (KIAT) auf Vorliegen einer Kennzeichnung zu dem gelöschten Schlüssel (ACC) überprüft wird und daß bei Vorliegen einer Kennzeichnung anhand der zugehörigen Adresse (PAD) entsprechende Einträge im Adreßumsetzungspuffer (TLB) gelöscht werden.

5. Datenverarbeitungsanlage nach Anspruch 4,
**dadurch gekennzeichnet,**
daß die ermittelte reale Seitenadresse (PAD) zunächst an den steuernden Prozessor (PIU) weitergeleitet wird und daß bei einer der Breite (1 Byte) eines Eintrags im Schlüsselspeicher (KM) entsprechenden Breite der Ausgabeschnittstelle (KMIB) die Übergabe der realen Seitenadresse (PAD) in entsprechenden Teilen nacheinander erfolgt.
